# EUROPEAN PATENT SPECIFICATION

(11) **EP 1 128 050 B1**
(45) Date of publication and mention of the grant of the patent: **16.06.2004**
(21) Application number: 01104185.2
(22) Date of filing: 21.02.2001
(51) Int. Cl.: F02D 41/40, F02D 35/02

(54) **Fuel injection control apparatus**
Kraftstoffeinspritzungssteuergerät
Dispositif de commande d'injection de carburant

(30) Priority: 25.02.2000 JP 2000054395
(43) Date of publication of application: 29.08.2001
(73) Proprietor: TOYOTA JIDOSHA KABUSHIKI KAISHA, Aichi-ken 471-8571 (JP)
(72) Inventor: Matsunaga, Akio, Toyota-shi, Aichi-ken, 471-8571 (JP)
(74) Representative: Böckelen, Rainer

(56) References cited:
- US-A- 5 373 448
- US-A- 5 739 417
- PATENT ABSTRACTS OF JAPAN vol. 012, no. 404 (M-757), 26 October 1988 (1988-10-26) & JP 63 147956 A (NIPPON DENSO CO LTD;OTHERS: 01), 20 June 1988 (1988-06-20)
- PATENT ABSTRACTS OF JAPAN vol. 1997, no. 01, 31 January 1997 (1997-01-31) & JP 08 246935 A (NISSAN MOTOR CO LTD), 24 September 1996 (1996-09-24)

## Description

### BACKGROUND OF THE INVENTION

### 1.Field of the Invention

The invention relates to a fuel injection control apparatus and, more particularly, to a fuel injection control apparatus performing combustion noise deadening control to deaden the combustion noise in an internal combustion engine.

### 2.Description of Related Art

It is known that a diesel knocking phenomenon occurs in an internal combustion engine such as a diesel engine. The diesel knocking phenomenon means that the combustion noise level abruptly increases because the rising rate of the combustion pressure becomes excessive due to the ignition delay or the like during combustion and a combustion gas resonates. In general, the combustion noise level tends to increase especially when the engine is started at such a low temperature as to cause a great ignition delay or when the engine is in a transient operation state where an ignition delay accompanied by a delay in the rise of the temperatures of intake air and combustion chambers is caused. In an engine performing high-pressure fuel injection, the combustion noise level tends to increase when the combustion speed increases due to an increase in the injection pressure.

It is known that pilot fuel injection, namely, the injection of a small amount of fuel into cylinders prior to main fuel injection is effective in preventing an increase in the combustion noise level. If pilot fuel injection is performed prior to main fuel injection, the fuel injected through pilot fuel injection burns prior to main fuel injection. Therefore, at the time of main fuel injection, the insides of the cylinders reach a temperature and a pressure that are suited for the ignition and combustion of fuel. Thus, pilot fuel injection reduces the ignition delay of the fuel injected through main fuel injection and prevents an increase of the combustion noise level in the internal combustion engine. In general, the combustion noise deadening effect achieved by pilot fuel injection changes greatly depending on the amount and timing of pilot fuel injection. For this reason, the achievement of the best combustion noise deadening effect requires detecting the combustion noise level of the engine during its actual operation and setting the amount and timing of pilot fuel injection so as to maximize the fall of the combustion noise level.

However, since the combustion noise level actually differs among cylinders or engines, it is difficult to evaluate the effect of pilot fuel injection accurately by simply comparing combustion noise levels. For example, in a cylinder (or engine) with a relatively high combustion noise level, even if the combustion noise level has been reduced substantially by pilot fuel injection, the combustion noise level still remains high. Conversely, in a cylinder with a relatively low combustion noise level, even if the combustion noise level has been reduced only slightly by pilot fuel injection, the combustion noise level is still low. That is, it is impossible to accurately evaluate the combustion noise deadening effect of pilot fuel injection by simply comparing combustion noise levels, and it becomes difficult to control the amount of pilot fuel injection and the like so as to maximize the combustion noise deadening effect.

Thus, the achievement of the best combustion noise deadening effect requires precisely detecting the fall of the combustion noise level caused by pilot fuel injection and controlling the amount of pilot fuel injection and the like.

For example, Japanese Patent Application Laid-Open No. HEI 8-246935 discloses a fuel injection control apparatus which, in the case where secondary fuel injection is carried out in a manner overlapping with main fuel injection in a diesel engine, controls the timing of secondary fuel injection so as to maximize the combustion noise deadening effect, although this fuel injection control apparatus does not detect the fall of the combustion noise level resulting from pilot fuel injection.

In the apparatus disclosed in this publication, the cylinder pressures are used as a value representing the combustion noise level, and the timing of secondary fuel injection is controlled based on the pressures detected by cylinder pressure sensors. In order to correct dispersion among the combustion pressures in the respective cylinders, the pressures in the respective cylinders in a reference state where no combustion occurs (at the time of motoring) are used as reference cylinder pressures.

That is, according to the apparatus disclosed in this publication, the cylinder pressures at the time of motoring are measured in advance, and the timing for secondary fuel injection is controlled based on the differences between the actual cylinder pressures during operation of the engine and the reference cylinder pressures at the time of motoring so as to achieve the best combustion noise deadening effect.

However, the combustion noise values detected by the cylinder pressure sensors during actual operation contain various noise components, which differ among the respective cylinders. Due to the interference of the noise components, the sensor output signals during operation have low S/N (signal-to-noise) ratios. Especially if the differences between the reference cylinder pressures and the actual cylinder pressures are relatively small, it is difficult to precisely detect changes in the cylinder pressures. For this reason, in the case where the difference between the combustion sound level in the reference state and the actual combustion noise level is simply used as a combustion noise central value to perform pilot fuel injection control as in the aforementioned Japanese Patent Application Laid-Open No. HEI 8-246935, it is impossible to accurately evaluate the combustion noise deadening effect of pilot fuel injection. This causes a problem in that the combustion noise deadening control cannot be performed in an appropriate manner.

In document JP 63 147956, a fuel injection rate control device for a Diesel engine is disclosed in which the pilot fuel injection is performed so that the combustion noise is reduced by detecting the combustion noise. The combustion noise detecting means according to this document is composed of a microphone, a band filter circuit for passing the output of the microphone only in an important frequency range and a peak-hold circuit. An analog signal from the combustion noise detecting means is delivered to an A/D converter in a microcomputer which controls a fuel injection timing control means so as to set the ignition timing of the engine to a desired ignition timing, and which receives a signal from the fuel noise detecting means to control a pilot injection means. The pilot fuel injection means receives a control signal from a microcomputer so that a piezo drive circuit charges and discharges a piezo actuator, thereby it is possible to control the pilot fuel injection amount and the rest time from the pilot injection and the main injection.

### SUMMARY OF THE INVENTION

It is an object of the invention to provide a fuel injection control apparatus capable of accurately evaluating the combustion noise deadening effect of pilot fuel injection and deadening the combustion noise level appropriately.

According to one aspect of the invention, a fuel injection control apparatus comprises combustion noise detecting means for detecting combustion noises in cylinders of an internal combustion engine, fuel injection means for performing main fuel injection in the cylinders and pilot fuel injection prior to main fuel injection in the cylinders, extracting means for extracting, from frequency components of the noises detected in the respective cylinders, frequency components of specific frequencies where the difference between a sound pressure during the performance of pilot fuel injection and a sound pressure during the stop of pilot fuel injection is locally maximized, combustion noise central value calculating means for calculating a combustion noise central value representing the magnitude of the combustion noises in the respective cylinders based on reference combustion noise values indicative of sound pressures of the specific frequency components of the combustion noises detected in the respective cylinders in a predetermined reference state and combustion noise values indicative of sound pressures of the specific frequency components of the respective cylinders during the performance of pilot fuel injection, and pilot fuel injection amount correcting means for correcting an amount or a timing of pilot fuel injection based on the calculated combustion noise central value.

That is, according to the aforementioned aspect, the sound pressures of the specific frequency components of the combustion noises are used as combustion noise values instead of directly using the detected combustion noises as combustion noise values. The specific frequency components cause a more drastic change in the sound pressure depending on whether to perform pilot fuel injection in comparison with other frequency components. By using such specific frequency components as combustion noise values, they change greatly in accordance with changes in the amount of pilot fuel injection and the like. Accordingly, the use of the specific frequency components of the combustion noises as combustion noise values makes it possible to increase the S/N ratios of the combustion noise values and relatively weaken the effect of noise components exerted on the combustion noise values. Thereby it becomes possible to accurately evaluate the combustion noise deadening effect of pilot fuel injection.

Cylinder pressure sensors for detecting the pressures in the respective cylinders and the like can be employed as the combustion noise detecting means. A state free from the effect of pilot fuel injection, such as a state of the stop of pilot fuel injection during engine operation or a state at the time of motoring, can be employed as the reference state.

In the aforementioned aspect, the specific frequencies may change in accordance with the engine speed and the engine load.

In the aforementioned aspect, the specific frequencies may change in accordance with the pilot fuel injection interval indicative of a time interval between pilot fuel injection and main fuel injection.

In the aforementioned aspect, the specific frequencies may be expressed as f × (n + (1/2)) given that f denotes the inverse of the pilot fuel injection interval and that n denotes 0 or a positive integer.

That is, the specific frequencies change in accordance with the engine speed and the engine load or the pilot fuel injection interval.

As will be described later, the analysis of frequencies of actual combustion noises during the performance of pilot fuel injection demonstrates that there is a frequency component where the sound pressure level decreases at intervals of a certain frequency. These specific frequencies change in accordance with the interval between pilot fuel injection and main fuel injection. It has been revealed that the relation F = (n + (1/2)) × f is established given that F denotes a specific frequency, that f denotes the inverse of a pilot fuel injection interval, and that n denotes a positive integer. Generally speaking, the pilot fuel injection interval is set in accordance with operating conditions such as the engine speed, the engine load and the like. Therefore, the pilot fuel injection interval changes in accordance with operating conditions such as the engine speed, the engine load and the like, and the aforementioned specific frequencies also change accordingly.

While the engine is in operation with pilot fuel injection being stopped, the oscillatory components do not fall frequently as described above.

Thus, the aforementioned specific frequency components of the combustion noises cause a more drastic decrease in the sound pressure level during the performance of pilot fuel injection in comparison with other frequency components. In other words, the fall of the sound pressure level during the performance of pilot fuel injection is less susceptible to the effect of noise components for those specific frequency components than for other frequency components. Accordingly, the use of the sound pressures of the specific frequency components as combustion noise values makes it possible to accurately evaluate the combustion noise deadening effect of pilot fuel injection.

### BRIEF DESCRIPTION OF THE DRAWINGS

Fig. 1 schematically shows the structure of an embodiment of the invention in the case of a diesel engine for a motor vehicle.

Fig. 2 shows how the sound pressure level changes in accordance with the frequency component of combustion noise.

Fig. 3 illustrates the principle of calculating the level of combustion noise in the embodiment shown in Fig. 1.

Fig. 4 schematically shows the structure of another embodiment of the invention.

### DETAILED DESCRIPTION OF PREFERRED EMBODIMENTS

Hereinafter, embodiments of the invention will be described with reference to the attached drawings.

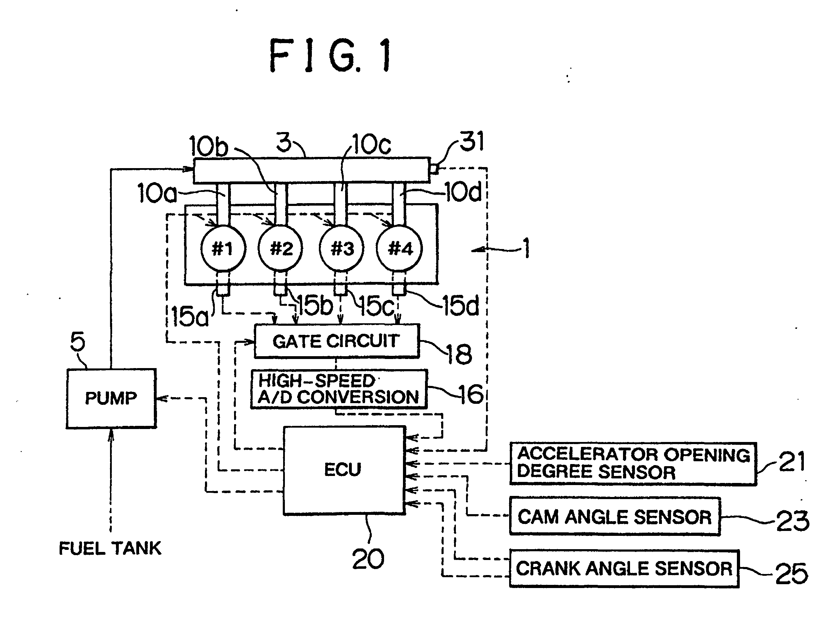

Fig. 1 schematically shows the structure of an embodiment of the invention in the case of a diesel engine for a motor vehicle. Referring to Fig. 1, the reference numeral 1 denotes an internal combustion engine (a four-cylinder four-cycle diesel engine having four cylinders #1 through #4 employed in this embodiment), the reference numerals 10a through 10d denote fuel injection valves for directly injecting fuel into the cylinders #1 through #4 of the engine 1 respectively, and the reference numeral 3 denotes a common accumulator (common rail) to which the fuel injection valves 10a through 10d are connected. The common rail 3 has the functions of storing the pressurized fuel supplied from a high-pressure fuel injection pump 5 and distributing the stored high-pressure fuel to the fuel injection valves 10a through 10d.

In this embodiment, the high-pressure fuel injection pump 5 is designed for example as a plunger-type pump having a discharge amount adjusting mechanism. The high-pressure fuel injection pump 5 pressurizes the fuel supplied from a fuel tank (not shown) to a predetermined pressure and supplies it to the common rail 3. An ECU 20 performs feedback control of the amount of the fuel force-fed from the pump 5 to the common rail 3 such that the pressure in the common rail 3 becomes equal to a target pressure.

The reference numeral 20 in Fig. 1 denotes an electronic control unit (ECU) for controlling the engine. The ECU 20 is constructed as a known digital computer wherein a read-only memory (ROM), a random access memory (RAM), a microprocessor (CPU) and I/O ports are interconnected to one another by a bi-directional bus. The ECU 20 controls opening movements of the fuel injection valves 10a through 10d, namely, the timings when they are opened, the periods during which they are open, and the like. Thus, the ECU 20 performs basic control of the engine, such as fuel injection control for controlling the timings and amounts of fuel injection.

For this purpose, in this embodiment, the common rail 3 is provided with a fuel pressure sensor 31 for detecting the fuel pressure in the common rail, and an accelerator opening degree sensor 21 for detecting the accelerator opening degree (the depression amount of an accelerator pedal determined by the driver) is provided in the proximity of the accelerator pedal (not shown) of the engine 1. A cam angle sensor 23 for detecting the rotational phase of a cam shaft of the engine 1 is disposed in the proximity thereof, and outputs a reference pulse every time a crank shaft of the engine 1 rotates by 720°CA. A crank angle sensor 25 for detecting the rotational phase of the crank shaft is disposed in the proximity thereof, and outputs a crank angle pulse every time the crank shaft rotates by a predetermined angle (e.g. 15°CA).

The cylinders of the engine 1 of this embodiment are provided with combustion noise sensors 15a through 15d respectively. The combustion noise sensors employed in this embodiment are designed as a cylinder pressure sensor for detecting the pressure in a cylinder.

In this embodiment, instead of cylinder pressure sensors, acoustic sensors with a gate circuit for detecting the generation of combustion noise in the respective cylinders and the like may be disposed in an engine room as the combustion noise sensors, so that the generation of engine noise is detected. Alternatively, this embodiment may also employ knock sensors (oscillation sensors) for detecting oscillation in the respective cylinders disposed in a cylinder block of the engine 1 during an explosion stroke. In Fig. 1, each of the cylinders is provided with one combustion noise sensor. However, for example, in the case where a strain sensor is provided in a cylinder gasket and where cylinder pressure sensors for detecting the strain of the gasket resulting from the pressures in the cylinders are employed, it is contemplable to arrange a sensor between adjacent ones of the cylinders and open the gate circuit in accordance with the combustion periods of the respective cylinders. Thereby it becomes possible to detect combustion noise in two or more cylinders using one combustion noise sensor.

The analog output signals from the fuel pressure sensor 31 and the accelerator opening degree sensor 21 are supplied to input ports of the ECU 20 through A/D converters (not shown). The pulse signals from the cam angle sensor 23 and the crank angle sensor 25 are directly inputted to input ports of the ECU 20. The ECU 20 calculates the rotational speed of the crank shaft based on the interval of crank angle pulses inputted from the crank angle sensor 25, and calculates the phase of the crank shaft from the number of crank angle pulses after the inputting of the reference pulse from the crank angle sensor 23. In this embodiment, the outputs of the combustion noise sensors 15a through 15d are supplied to an input port of the ECU 20 through a gate circuit 18 and a high-speed A/D converter 16. The high-speed A/D converter 16 is capable of performing high-speed sampling. This embodiment employs an A/D converter capable of performing sampling at intervals of 1KHz or more, preferably, about 5KHz.

The ECU 20 outputs a gate-open signal to the gate circuit 18 for a predetermined period from a timing calculated from the fuel injection timings of the respective cylinders according to a later-described method. While the gate-open signal is being inputted to the gate circuit 18, the analog signal from the combustion noise sensor 15 of a relevant one of the cylinders is inputted from the gate circuit 18 to the high-speed A/D converter 16, converted into a digital signal, and supplied to the input port of the ECU 20. This gate-open period is set to a period during which combustion is caused by main fuel injection. The gate circuit 18 employed in this embodiment may be of a known construction.

Output ports of the ECU 20 are connected to the high-pressure fuel injection pump 5 and the fuel injection valves 10a through 10d of the respective cylinders through drive circuits (not shown). Another output port of the ECU 20 is connected to the gate circuit 18, so that a gate-open signal is supplied to the gate circuit 18.

In this embodiment, the ECU 20 performs pilot fuel injection before performing main fuel injection in the respective cylinders. As described above, the combustion noise in each of the respective cylinders changes in accordance with the amount of pilot fuel injection. Thus, in order to achieve the best combustion noise deadening effect through pilot fuel injection, it is necessary to precisely detect changes in the combustion noise in the respective cylinders caused by pilot fuel injection, and adjust the amounts and timings of pilot fuel injection so as to minimize the combustion noise levels. In this embodiment, the combustion noise levels (the combustion pressures in this embodiment) detected by the combustion noise sensors 15a through 15d for the respective cylinders are subjected to signal processings to calculate a combustion noise central value. Based on this combustion noise central value, feedback control for changing the amounts of pilot fuel injection is performed so as to minimize the combustion noise levels in the respective cylinders.

Hereinafter, it will be described how the combustion noise central value is calculated according to this embodiment.

In this embodiment, the combustion noise central value representing the level of combustion noise is calculated using those of the detected frequency components of combustion noise at which the sound pressure level greatly changes (the combustion pressure greatly changes in this embodiment) depending on whether to perform pilot fuel injection.

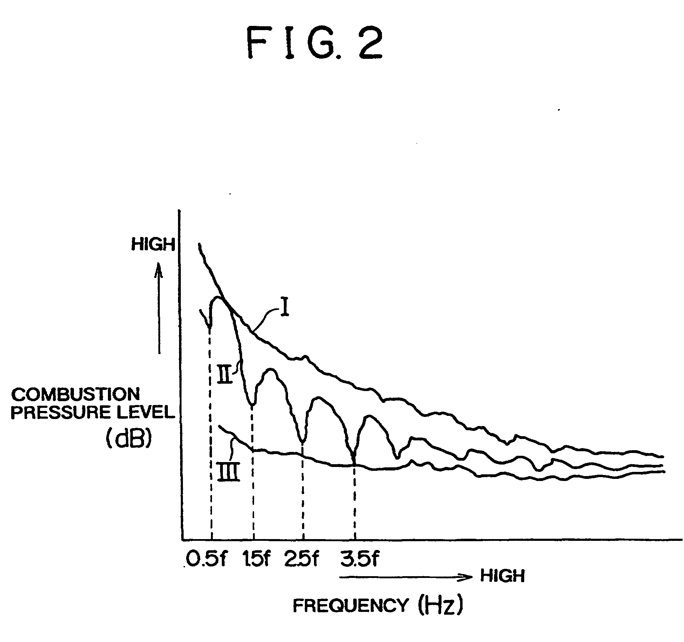

Fig. 2 shows a result of the analysis of frequencies of the cylinder pressure during the combustion of fuel based on main fuel injection. Referring to Fig. 2, the axis of ordinate represents sound pressure (combustion pressure) levels (dB) of the respective frequency components, and the axis of abscissa represents frequencies. A curve I shown in Fig. 2 represents combustion pressure levels of the respective frequency components in the case where pilot fuel injection is not performed (pilot fuel injection is stopped). A curve II shown in Fig. 2 represents combustion pressure levels of the respective frequency components in the case where pilot fuel injection is performed under the same condition as the curve I. A curve III shown in Fig. 2 represents combustion pressure levels of the respective frequency components at the time of motoring at the same rotational speed (when fuel injection is cut).

As shown in Fig. 2, the combustion pressure levels of the respective frequency components are the highest when pilot fuel injection is stopped (the curve I), and the lowest at the time of motoring (the curve III). When pilot fuel injection is performed (the curve II), the combustion pressure levels of the respective frequency components decrease due to the effect of pilot injection and assume values between those during the stop of pilot fuel injection (the curve I) and those at the time of motoring (the curve III). However, as indicated by the curve II in Fig. 2, when pilot fuel injection is performed, the combustion pressure levels of all the frequency components do not necessarily decrease uniformly. In other words, it has been revealed that there is a frequency component at which the combustion pressure level decreases more drastically in comparison with the other frequency components. It has also been revealed that this frequency component has a frequency equal to the product of (n + (1/2)) (n = 0 or a positive integer) and the inverse f of the period (the pilot fuel injection interval) (seconds) between the timing for pilot fuel injection and the timing for main fuel injection. That is, if a comparison is made between the case where pilot fuel injection is stopped (the curve I in Fig. 2) and the case where pilot fuel injection is performed (the curve II in Fig. 2), the sound pressure level decreases in the latter case in comparison with the former case. In particular, as for the frequency component having a frequency of (n + (1/2)) × f, the sound pressure level assumes locally minimum values when pilot fuel injection is performed (i.e., referring to the curve II, the sound pressure level falls every time the frequency becomes equal to (n + (1/2)) × f). Accordingly, it is apparent that the difference between the sound pressure level during the stop of pilot fuel injection and the sound pressure level during the performance of pilot fuel injection is locally maximized at those frequencies.

The sound pressure level thus falls every time the frequency becomes equal to (n + (1/2)) × f during the performance of pilot fuel injection presumably because of the following reason.

That is, if pilot fuel injection is performed, the injected fuel burns in combustion chambers and the combustion of the fuel generates pressure waves. After the lapse of the pilot fuel injection interval, main fuel injection is performed. The combustion of the fuel injected during main fuel injection generates pressure waves. The pressure waves generated by pilot fuel injection and the pressure waves generated by main fuel injection are reflected in the combustion chambers and interfere with each other. For this reason, it is considered that, in accordance with the interval between pilot fuel injection and main fuel injection, the sound pressure level is amplified at a frequency component equal to n × f and damped at a frequency component equal to (n + (1/2)) × f.

As described above, when pilot fuel injection is performed, the sound pressure level decreases more drastically at a frequency component equal to (n + (1/2)) × f in comparison with other frequency components. Thus, for example, if a comparison is made at the aforementioned frequency component between the case where pilot fuel injection is stopped and the case where pilot fuel injection is performed, the difference in the sound pressure level is greater than at other frequency components. Thus, even when a noise component mixes with measured values of the sound pressure level, the sound pressure level falls drastically with respect to the noise component. That is, measurement of the sound pressure level of the frequency component equal to (n + (1/2)) × f makes it possible to obtain a signal of a great S/N ratio when quantitatively calculating the combustion noise deadening effect of pilot fuel injection. In the following description, the frequency equal to (n + (1/2)) × f will be referred to as a specific frequency.

As described above, by evaluating the combustion noise deadening effect of pilot fuel injection based on the specific frequency component of the sound pressure (combustion pressure) level detected by the combustion pressure sensor 15 during the performance of pilot fuel injection, it becomes possible to perform combustion noise deadening control with high precision. However, the combustion pressure actually differs among the respective cylinders. Therefore, if the sound pressure levels of the specific frequency components of the respective cylinders are directly used to perform control, the control deviation among the cylinders may be enlarged. Thus, according to this embodiment, for each of the cylinders, the sound pressure level of the specific frequency component of combustion noise in a reference operation state and the sound pressure level of the specific frequency component of combustion noise during the performance of pilot fuel injection are used to calculate a dimensionless combustion noise central value. The pilot fuel injection amount is controlled based on the combustion noise central value.

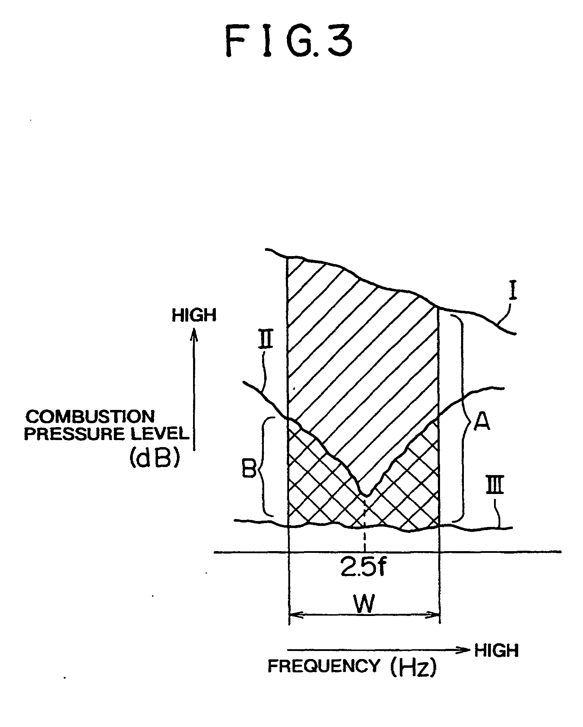

Fig. 3 illustrates a method of calculating the combustion noise central value according to this embodiment.

Fig. 3 shows in an enlarged manner the sound pressure level in a relatively narrow frequency range around one of the specific frequencies shown in Fig. 2. As is the case with Fig. 2, curves I, II and III shown in Fig. 3 represent the sound pressure levels of the frequency components during the stop of pilot fuel injection, during the performance of pilot fuel injection, and at the time of motoring respectively.

In this embodiment, a frequency range of a width W is set around the specific frequency of each of the cylinders, and the ratio R of the area surrounded by the curves II, III (the area indicated by B in Fig. 3) to the area surrounded by the curves I, III (the area indicated by A in Fig. 3) (R = B/A) is used as a combustion noise central value for each of the cylinders. The curve I represents the combustion noise level during the stop of pilot fuel injection, and hence, is considered to represent the maximum combustion noise level in the respective cylinders. The curve III represents the combustion noise level at the time of motoring (when combustion does not occur in the cylinders), and hence, represents the sound pressure level containing no combustion noise, namely, the magnitude of noise. Therefore, the area A is considered to be the maximum value of those of the sound pressure levels in the respective cylinders which result exclusively from combustion noise. By the same token, the area surrounded by the curves II, III represents the sound pressure level that results exclusively from the combustion noise during the performance of pilot fuel injection. The curves I, III are fixed for each of the cylinders once the engine operating condition (engine speed and load) has been determined. Thus, the area A assumes a constant value characteristic of each of the cylinders if the engine operating condition is determined. Accordingly, the ratio (B/A) of the area B to the area A indicates how much the combustion noise level in each of the cylinders during the performance of pilot fuel injection has fallen with respect to the maximum value.

During actual operation, the pilot fuel injection interval is optimally set in accordance with the engine operating condition (engine speed and load). Thus, if the engine operating condition changes, the pilot fuel injection interval changes and the specific frequency also changes accordingly. Further, if the engine operating condition changes, the sound pressure level of combustion noise during the stop of pilot fuel injection in the respective cylinders (the curve I in Figs. 2, 3) and the sound pressure level at the time of motoring (the curve III in Figs. 2, 3) also change.

In this embodiment, the ECU 20 calculates the combustion noise central value R in each of the cylinders according to a procedure that will be described below, and adjusts the fuel injection amount in each of the cylinders so as to minimize the combustion noise central value R thus calculated.

That is, the ECU 20 outputs a gate-open signal to the gate circuit 18 during a period when fuel burns due to main fuel injection in the proximity of a compression top dead center in each of the cylinders. The A/D converter 16 then converts an analog output signal from the combustion noise sensor of the relevant cylinder (one of the sensors 15a through 15d) into a digital signal, which is inputted to the ECU 20. The ECU 20 calculates the specific frequency (n + (1/2)) × f based on the pilot fuel injection interval (1/f) that is determined from the engine operating condition (engine speed and load), performs FFT (Fast Fourier Transformation) processings for the sound pressure signal inputted as mentioned above, and calculates the sound pressure level in the frequency range that has a width W (Fig. 3) and stretches around a predetermined one of the specific frequencies (e.g. 2.5f).

The sound pressure levels of the aforementioned specific frequency range W are calculated from the curves I, III under respective engine operating conditions prestored in the ROM of the ECU 20, and the areas A, B shown in Fig. 3 are calculated from those sound pressure levels. Using the areas A, B, the combustion noise central value R is calculated as R = B/A.

In this embodiment, the pilot fuel injection interval is prestored in the ROM of the ECU 20 as a numerical table using accelerator opening degrees indicative of engine loads and engine speeds. By the same token, the curves I, III under the respective operating conditions of the respective cylinders are stored in the ROM of the ECU 20 as the frequency component values of the sound pressure levels that have been measured by the combustion sound sensors 15a through 15d based on the actual operations under the respective operating conditions during the stop of pilot fuel injection and at the time of motoring.

The aforementioned procedure helps calculate the combustion noise central value that qualitatively represents the combustion sound deadening effect during the actual performance of pilot fuel injection.

The ECU 20 then corrects the pilot fuel injection amount so as to minimize the combustion noise central value R calculated as mentioned above. The pilot fuel injection amount has a reference value QPL for each engine operating condition. As is the case with the pilot fuel injection interval, the pilot fuel injection amount is stored in the ROM of the ECU 20 as a numerical table using engine speeds and accelerator opening degrees. In this embodiment, the sum of the reference value QPL and a correction amount ΔQPL is set as the actual pilot fuel injection amount, and the value ΔQPL for each of the cylinders is corrected so as to minimize the combustion noise central value R.

More specifically, the ECU 20 increases the value ΔQPL by a constant amount for every cycle, and the change in the combustion noise central value R from the preceding cycle is detected so as to determine for each cylinder the value ΔQPL where the combustion noise central value R is at its minimum. That is, if the combustion noise central value R uniformly decreases in response to an increase in the correction amount ΔQPL, the ECU 20 continues to increase the correction amount ΔQPL for every cycle, and the correction amount ΔQPL at the time when the combustion noise central value R has increased in comparison with the preceding cycle is calculated. This is stored as the optimal pilot fuel injection correction amount under the current operating condition of the relevant cylinder. If the combustion noise central value R uniformly increases in response to an increase in the correction amount ΔQPL, the ECU 20 then reduces the correction amount ΔQPL by a constant amount for each cycle, and the correction amount ΔQPL at the time when the combustion noise central value R starts increasing is stored as the optimal pilot fuel injection correction amount under the current operating condition of the relevant cylinder. By performing this procedure for each cylinder, it becomes possible to calculate the optimal correction amount ΔQPL that minimizes the combustion noise level under the current engine operating condition.

The optimal correction amount thus calculated is stored together with the engine operating conditions in a back-up RAM that does not lose its memories even if the main switch has been turned off. If operation is performed next time under the same condition, the optimal correction amount is used as an initial value of the correction amount ΔQPL. Thereby the actual pilot fuel injection amount is controlled so as to minimize the combustion noise level in each of the cylinders.

In the foregoing description of the embodiment, with the pilot fuel injection interval remaining unchanged, the pilot fuel injection amount is corrected so as to minimize the combustion noise level. However, a similar procedure can be applied to correct the pilot fuel injection interval so as to minimize the combustion noise level, with the pilot fuel injection amount remaining unchanged. Furthermore, the aforementioned procedure can also be applied to first correct the pilot fuel injection amount (or interval) so as to minimize the combustion noise level with the pilot fuel injection interval (or amount) remaining unchanged, and then correct the pilot fuel injection interval (or amount) so as to further reduce the combustion noise level with the pilot fuel injection amount (or interval) remaining unchanged.

As described above, in this embodiment, the combustion noise central value R is calculated based on the specific frequency component of the sound pressure level, whereby it becomes possible to accurately evaluate the combustion noise deadening effect of pilot fuel injection. Thus, even if the fuel injection amount properties (the relation between current-supply periods and fuel injection amounts) have changed for example due to the degradation of fuel injection valves, the pilot fuel injection amount is always controlled optimally.

For example, even in the case requiring a combustion mode wherein a premixed gas is formed in the combustion chambers without burning the fuel injected through pilot fuel injection, the pilot fuel injection interval is controlled such that the combustion noise central value R based on the aforementioned specific frequency component assumes 1 (that the combustion noise level approaches the curve I in Fig. 2). This makes it possible to adjust the pilot fuel injection interval so as to ensure the formation of a premixed gas without burning the fuel injected through pilot fuel injection.

Furthermore, if the specific frequency closest to the frequency one finds most uncomfortable (e.g. 3KHz) is used for example in calculating the combustion noise central value R, it becomes possible to intensively reduce combustion noise components having uncomfortable frequencies.

Furthermore, the aforementioned embodiment requires the high-speed A/D conversion and FFT processings to process the outputs from the combustion noise sensors. However, similar processings can be performed using a band-pass filter with a variable pass band (a variable band-pass filter) and a peak-holding circuit.

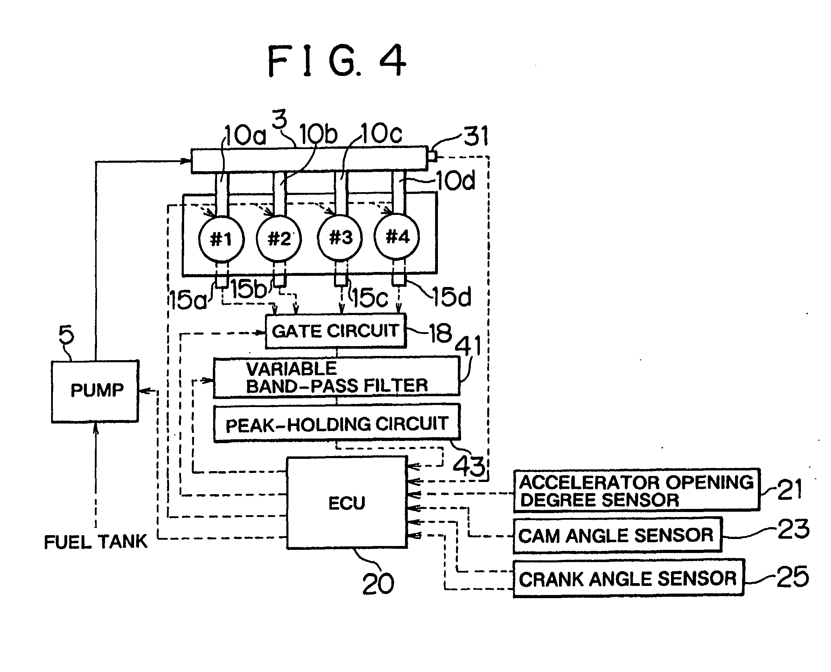

Fig. 4 shows, in a manner similar to Fig. 1, the structure of another embodiment employing a variable band-pass filter and a peak-holding circuit.

The embodiment shown in Fig. 4 is different from that shown in Fig. 1 in that a variable band-pass filter 41 and a peak-holding circuit 43 are used instead of the high-speed A/D converter 16. The variable band-pass filter 41 has a pass band that is variable in accordance with the control signal from the ECU 20. In this embodiment, the pass band of the variable band-pass filter 41 is set to a fairly narrow range. The ECU 20 calculates the specific frequency from the engine operating condition according to the aforementioned method, and sets the mean value of the pass band of the variable band-pass filter 41 to the specific frequency thus calculated. Thus, the opening of the gate circuit 18 allows only those frequency components which are within the fairly narrow range in the proximity of the specific frequency to pass through the variable band-pass filter 41, and the sound pressure level of the specific frequency component is detected without performing the FFT conversion. In this embodiment, the peak-holding circuit 43 detects the maximum value of the sound pressure level of the specific frequency component while the gate is open, and the combustion noise central value R is calculated based on the maximum value substantially in the same manner as in Fig. 3. This makes it possible to easily calculate the combustion noise central value R without the need for the high-speed A/D converter or the FFT processings.

Combustion noise sensors (15a through 15d) are disposed in respective cylinders of an engine (1), and a gate circuit (18) detects combustion noises in the respective cylinders. The combustion noises are subjected to A/D conversion by a high-speed A/D converter (18) and inputted to an ECU (20) as combustion noise signals for the respective cylinders. The ECU (20) performs FFT processings for the inputted combustion noise signals and calculates a combustion noise central value based on sound pressure levels of specific frequency components. The specific frequency components are expressed as (n + (1/2)) × f given that f denotes the inverse of the pilot fuel injection interval (seconds). The specific frequency components cause a more drastic fall of the sound pressure level during the performance of pilot fuel injection with respect to the sound pressure level during the stop of pilot fuel injection in comparison with other frequency components. Therefore, the calculated combustion noise central value is unsusceptible to noises, and hence, accurately reflects the combustion noise deadening effect.

Selected Drawing: Fig. 1

## Claims

1. A fuel injection control apparatus having combustion noise detecting means (15a through 15d) for detecting combustion noises in cylinders of an internal combustion engine (1) and fuel injection means (10a through 10d) for performing main fuel injection in the cylinders and pilot fuel injection prior to main fuel injection in the cylinders, wherein said apparatus comprises:
extracting means for extracting, from frequency components of the noises detected in the respective cylinders, frequency components of specific frequencies where the difference between a sound pressure during performance of pilot fuel injection and a sound pressure during stop of pilot fuel injection is locally maximized;
combustion noise central value calculating means for calculating a combustion noise central value representing the magnitude of the combustion noises in the respective cylinders based on reference combustion noise values indicative of sound pressures of the specific frequency components of the combustion noises detected in the respective cylinders in a predetermined reference state and combustion noise values indicative of sound pressures of the specific frequency components of the respective cylinders during performance of pilot fuel injection; and
pilot fuel injection amount correcting means for correcting an amount or a timing of pilot fuel injection based on the calculated combustion noise central value.

2. The fuel injection control apparatus according to claim 1,
**characterized in:**
**that** the specific frequencies change in accordance with an engine speed and an engine load.

3. The fuel injection control apparatus according to claim 1,
**characterized in:**
**that** the specific frequencies change in accordance with a pilot fuel injection interval indicative of a time interval between pilot fuel injection and main fuel injection.

4. The fuel injection control apparatus according to claim 1,
**characterized in:**
**that** the specific frequencies are expressed as f × (n + (1/2)) given that f denotes the inverse of the pilot fuel injection interval and that n denotes 0 or a positive integer.

5. The fuel injection control apparatus according to one of claims 1 through 4, **characterized in:**
**that** the combustion noise detecting means (15a through 15d) are cylinder pressure sensors for detecting pressures in the respective cylinders.

6. The fuel injection control apparatus according to one of claims 1 through 5, **characterized in:**
**that** the reference state represents at least one of a state of stop of pilot fuel injection during operation of the engine and a state of motoring.

7. The fuel injection control apparatus according to one of claims 1 through 6, **characterized in:**
**that** the combustion noise central value calculating means performs high-speed A/D conversion and FFT processings when calculating the combustion noise central value.

8. The fuel injection control apparatus according to one of claims 1 through 6, **characterized in:**
**that** the combustion noise central value calculating means uses a variable band-pass filter (41) and a peak-holding circuit (43) when calculating the combustion noise central value.

9. A fuel injection control method for an internal combustion engine having fuel injection means (10a through 10d) for performing main fuel injection in the cylinders and pilot fuel injection prior to main fuel injection in the cylinders, wherein said method comprises the steps of:
detecting combustion noises in the respective cylinders of the internal combustion engine;
extracting, from frequency components of the noises detected in the respective cylinders, frequency components of specific frequencies where the difference between a sound pressure during performance of pilot fuel injection and a sound pressure during stop of pilot fuel injection is locally maximized;
calculating a combustion noise central value representing the magnitude of the combustion noises in the respective cylinders based on reference combustion noise values indicative of sound pressures of the specific frequency components of the combustion noises detected in the respective cylinders in a predetermined reference state and combustion noise values indicative of sound pressures of the specific frequency components of the respective cylinders during performance of pilot fuel injection; and
correcting an amount or a timing of pilot fuel injection based on the calculated combustion noise central value.

## Patentansprüche

1. Kraftstoffeinspritzsteuergerät mit einem Verbrennungsgeräuschfeststellmittel (15a bis 15d) zum Feststellen von Verbrennungsgeräuschen in Zylindern eines Verbrennungskraftmotors (1) und mit einem Kraftstoffeinspritzmittel (10a bis 10d) zum Ausführen einer Hauptkraftstoffeinspritzung in die Zylinder und einer Pilotkraftstoffeinspritzung vor der Hauptkraftstoffeinspritzung in die Zylinder, mit:
einem Auslesemittel zum Auslesen aus Frequenzkomponenten der in den jeweiligen Zylindern festgestellten Geräusche von Frequenzkomponenten spezifischer Frequenzen, bei denen die Differenz zwischen einem Schalldruck während des Ausführens der Pilotkraftstoffeinspritzung und einem Schalldruck während des Stopps der Pilotkraftstoffeinspritzung lokal maximiert ist;
einem Rechenmittel für den Verbrennungsgeräuschmittenwert zum Errechnen eines Verbrennungsgeräuschmittenwertes, der die Stärke der Verbrennungsgeräusche in den jeweiligen Zylindern auf der Grundlage von Bezugsverbrennungsgeräuschwerten darstellt, die Schalldrücke der spezifischen Frequenzkomponenten von in den jeweiligen Zylindern in einem vorbestimmten Bezugszustand festgestellten Verbrennungsgeräuschen aufzeigen, und von Verbrennungsgeräuschwerten, die Schalldrücke der spezifischen Frequenzkomponenten jeweiliger Zylinder während des Ausführens der Pilotkraftstoffeinspritzung aufzeigen; und mit
einem Korrekturmittel für Pilotkraftstoffeinspritzmengen zum Korrigieren einer Menge oder einer Zeitvorgabe der Pilotkraftstoffeinspritzung auf der Grundlage des errechneten Verbrennungsgeräuschmittenwertes.

2. Kraftstoffeinspritzsteuergerät nach Anspruch 1, **dadurch gekennzeichnet, daß**
eine Änderung der spezifischen Frequenzen gemäß der Motorgeschwindigkeit und der Motorbelastung erfolgt.

3. Kraftstoffeinspritzsteuergerät nach Anspruch 1, **dadurch gekennzeichnet, daß**
die Änderung der spezifischen Frequenzen gemäß einem Pilotkraftstoffeinspritzintervall erfolgt, das ein Zeitintervall zwischen Pilot- und Hauptkraftstoffeinspritzung aufzeigt.

4. Kraftstoffeinspritzsteuergerät nach Anspruch 1, **dadurch gekennzeichnet, daß**
die spezifischen Frequenzen darstellbar sind mit f × (n + (1/2)), wobei f das inverse Pilotkraftstoffeinspritzintervall bedeutet, und n bedeutet 0 oder eine positive Ganzzahl.

5. Kraftstoffeinspritzsteuergerät nach einem der Ansprüche 1 bis 4, **dadurch gekennzeichnet, daß**
das Verbrennungsgeräuschfeststellmittel (15a bis 15d) Zylinderdrucksensoren sind, die Drücke in den jeweiligen Zylindern feststellen.

6. Kraftstoffeinspritzsteuergerät nach einem der Ansprüche 1 bis 5, **dadurch gekennzeichnet, daß**
der Bezugszustand wenigstens einen Zustand des Stoppens der Pilotkraftstoffeinspritzung während des Motorbetriebs und/oder einen Zustand des Fahrens darstellt.

7. Kraftstoffeinspritzsteuergerät nach einem der Ansprüche 1 bis 6, **dadurch gekennzeichnet, daß**
das Rechenmittel für den Verbrennungsgeräuschmittenwert bei Errechnen des Verbrennungsgeräuschmittenwertes eine Hochgeschwindigkeits-A/D-Umsetzung und FFT-Verarbeitungen ausführt.

8. Kraftstoffeinspritzsteuergerät nach einem der Ansprüche 1 bis 6, **dadurch gekennzeichnet, daß**
das Rechenmittel für den Verbrennungsgeräuschmittenwert bei Errechnen des Verbrennungsgeräuschmittenwertes ein variables Bandpaßfilter (41) und eine Spitzenwerthalteschaltung (43) benutzt.

9. Kraftstoffeinspritzsteuerverfahren für einen Verbrennungskraftmotor mit einem Kraftstoffeinspritzmittel (10a bis 10d) zum Ausführen einer Hauptkraftstoffeinspritzung in die Zylinder und einer Pilotkraftstoffeinspritzung vor der Hauptkraftstoffeinspritzung in die Zylinder, mit den Verfahrensschritten:
Feststellen von Verbrennungsgeräuschen in den jeweiligen Zylindern des Verbrennungskraftmotors;
Auslesen aus Frequenzkomponenten der in den jeweiligen Zylindern festgestellten Geräusche von Frequenzkomponenten spezifischer Frequenzen, bei denen der Unterschied zwischen einem Schalldruck während des Ausführens der Pilotkraftstoffeinspritzung und einem Schalldruck während des Stoppens der Pilotkraftstoffeinspritzung lokal maximiert ist;
Errechnen eines Verbrennungsgeräuschmittenwertes, der die Stärke der Verbrennungsgeräusche in den jeweiligen Zylindern repräsentiert, auf der Grundlage von Bezugsverbrennungsgeräuschwerten, die Schalldrücke der spezifischen Frequenzkomponenten von den in den jeweiligen Zylindern in einem vorbestimmten Bezugszustand festgestellten Verbrennungsgeräuschen und von Verbrennungsgeräuschwerten aufzeigen, die Schalldrücke spezifischer Frequenzkomponenten der jeweiligen Zylinder während des Ausführens der Pilotkraftstoffeinspritzung aufzeigen; und
Korrigieren von Menge oder Zeitvorgabe der Pilotkraftstoffeinspritzung auf der Grundlage des errechneten Verbrennungsgeräuschmittenwertes.

## Revendications

1. Appareil de commande d'injection de carburant comportant des moyens (15a à 15d) de détection du bruit de combustion destinés à détecter les bruits de combustion dans les cylindres d'un moteur à combustion interne (1) et des moyens (10a à 10d) d'injection de carburant destinés à mettre en oeuvre une injection principale de carburant dans les cylindres et une préinjection de carburant préalable à l'injection principale de carburant dans les cylindres, dans lequel ledit appareil comprend :
un moyen d'extraction destiné à extraire, à partir des composantes de fréquence des bruits détectés dans les cylindres respectifs, les composantes de fréquence des fréquences spécifiques pour lesquelles la différence entre une pression acoustique pendant la mise en oeuvre de la préinjection de carburant et une pression acoustique pendant l'arrêt de la préinjection de carburant est localement maximisée ;
un moyen de calcul de valeur centrale de bruit de combustion destiné à calculer une valeur centrale de bruit de combustion représentant l'amplitude des bruits de combustion dans les cylindres respectifs en se basant sur des valeurs de référence de bruit de combustion indicatives des pressions acoustiques des composantes à la fréquence spécifique des bruits de combustion détectés dans les cylindres respectifs dans un état de référence prédéterminé et sur des valeurs de bruit de combustion indicatives des pressions acoustiques des composantes à la fréquence spécifique des cylindres respectifs pendant la mise en oeuvre de la préinjection de carburant ; et
un moyen de correction de la valeur de la préinjection de carburant destiné à corriger une valeur ou un moment de la préinjection de carburant en se basant sur la valeur centrale de bruit de combustion calculée.

2. Appareil de commande d'injection de carburant selon la revendication 1, **caractérisé en ce que** :
les fréquences spécifiques changent en fonction de la vitesse de rotation du moteur et de la charge du moteur.

3. Appareil de commande d'injection de carburant selon la revendication 1, **caractérisé en ce que** :
les fréquences spécifiques changent en fonction de l'intervalle de préinjection de carburant indicatif d'un intervalle de temps entre la préinjection de carburant et l'injection principale de carburant.

4. Appareil de commande d'injection de carburant selon la revendication 1, **caractérisé en ce que** :
les fréquences spécifiques sont exprimées par (n + (1/2)) × f où f désigne l'inverse de l'intervalle de la préinjection de carburant et où n désigne 0 ou un entier positif.

5. Appareil de commande d'injection de carburant selon l'une quelconque des revendications 1 à 4, **caractérisé en ce que** :
les moyens (15a à 15d) de détection de bruit de combustion sont des capteurs de pression de cylindre destinés à détecter les pressions dans les cylindres respectifs.

6. Appareil de commande d'injection de carburant selon l'une quelconque des revendications 1 à 5, **caractérisé en ce que** :
l'état de référence représente au moins soit un état d'arrêt de la préinjection de carburant pendant le fonctionnement du moteur, soit un état de dégommage.

7. Appareil de commande d'injection de carburant selon l'une quelconque des revendications 1 à 6, **caractérisé en ce que** :
le moyen de calcul de la valeur centrale de bruit de combustion met en oeuvre une conversion A/D à grande vitesse et des traitements par FFT quand il calcule la valeur centrale de bruit de combustion.

8. Appareil de commande d'injection de carburant selon l'une quelconque des revendications 1 à 6, **caractérisé en ce que** :
le moyen de calcul de la valeur centrale de bruit de combustion utilise un filtre (41) à bande passante variable et un circuit (43) de retenue de crête quand il calcule la valeur centrale de bruit de combustion.

9. Procédé de commande d'injection de carburant pour un moteur à combustion interne comportant des moyens (10a à 10d) d'injection de carburant destinés à mettre en oeuvre une injection principale de carburant dans les cylindres et une préinjection de carburant préalable à l'injection principale de carburant dans les cylindres, dans lequel ledit procédé comprend les étapes consistant à :
détecter les bruits de combustion dans les cylindres respectifs du moteur à combustion interne ;
extraire, à partir des composantes de fréquence des bruits détectés dans les cylindres respectifs, les composantes de fréquence des fréquences spécifiques pour lesquelles la différence entre une pression acoustique pendant la mise en oeuvre de la préinjection de carburant et une pression acoustique pendant l'arrêt de la préinjection de carburant est localement maximisée ;
calculer une valeur centrale de bruit de combustion représentant l'amplitude des bruits de combustion dans les cylindres respectifs en se basant sur des valeurs de référence de bruit de combustion indicatives des pressions acoustiques des composantes à la fréquence spécifique des bruits de combustion détectés dans les cylindres respectifs dans un état de référence prédéterminé et sur des valeurs de bruit de combustion indicatives des pressions acoustiques des composantes à la fréquence spécifique des cylindres respectifs pendant la mise en oeuvre de la préinjection de carburant ; et
corriger une valeur ou un moment de la préinjection de carburant en se basant sur la valeur centrale de bruit de combustion calculée.
